(19) Europäisches Patentamt
European Patent Office
Office européen des brevets

(11) **EP 3 339 800 A1**

(12) **EUROPEAN PATENT APPLICATION**

(43) Date of publication:
**27.06.2018 Bulletin 2018/26**

(51) Int Cl.:
*G01B 11/25* (2006.01)   *G06T 7/50* (2017.01)

(21) Application number: **17207560.8**

(22) Date of filing: **15.12.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **26.12.2016   JP 2016250626**

(71) Applicant: **Seiko Epson Corporation**
**Tokyo 160-8801 (JP)**

(72) Inventor: **INUKAI, Teruyuki**
**Suwa-shi, Nagano 392-8502 (JP)**

(74) Representative: **Miller Sturt Kenyon**
**9 John Street**
**London WC1N 2ES (GB)**

(54) **IMAGE PROCESSING APPARATUS AND IMAGE PROCESSING METHOD**

(57)    An image processing apparatus includes a control unit that controls a projection unit that projects fringe pattern light, an imaging unit that captures an image, a luminance value acquisition unit that acquires a luminance value from a captured image, and a three-dimensional point group generation unit that calculates a three-dimensional shape based on a luminance value. The control unit includes an extended control unit that controls a luminance distribution acquisition unit that acquires luminance distribution of an object from the captured image obtained by causing the projection unit to project uniform pattern light, and a projection luminance setting unit that sets a projection luminance distribution pattern based on luminance distribution. The extended control unit causes the projection unit to project pattern light obtained by combining the projection luminance distribution pattern set by the projection luminance setting unit and the fringe pattern so that the imaging unit images the object.

FIG. 1

**Description**

BACKGROUND

1. Technical Field

The present invention relates to an image processing apparatus and an image processing method, and particularly to an image processing apparatus and an image processing method which are usable for three-dimensional (3D) measurement technique used for product shape inspection, robotic picking, reverse engineering, or the like.

2. Related Art

In recent years, there has been an increasing demand for a technique relating to accurate three-dimensional shape measurement in product shape inspection, robotic picking, reverse engineering, or the like. Such accurate three-dimensional shape measurement can be used for various applications, such as scratch checking of industrial products or the like, pin picking, application of a measurement result to a three-dimensional printer.

In the related art, known three-dimensional shape measurement uses a phase shift method which uses a projector and a camera (see JP-A-2009-115612). In this method, an image of a sinusoidal pattern projected by a projector is captured by a camera, the correspondence between a pixel of the captured image and the corresponding pixel of the projection image (i.e., correspondence of pixels between the projector and the camera) is calculated, and the depth of the captured image is calculated by triangulation.

In such a three-dimensional shape measurement method, for example, in the case where a product which has a portion having a large difference in brightness, such as a black and white portion, is inspected, if the light intensity and exposure time are both adjusted for bright areas, the result is insufficient light intensity in dark areas, and if the light intensity and the exposure time are both adjusted for dark areas, the result is halation in the bright areas. Therefore, it is necessary to perform a plurality of measurements while adjusting light intensity and exposure time in the camera in accordance with the black and white areas.

Therefore, there has been proposed a three-dimensional measurement apparatus that measures an object three-dimensionally. When an object to be measured has a plurality of areas of varying brightness (colors), a plurality of test blocks are assigned to the object to be measured. Illuminance for measurement is determined for each of the assigned test blocks. A fringe pattern is projected on each test block by the projection unit using the determined illuminance for measurement. A fringe image on the test block on which the fringe pattern is projected is captured by an imaging unit, and the object to be measured is three-dimensionally measured on the basis of the captured fringe images (see JP-A-2013-036791).

However, also in the above three-dimensional measurement apparatus, the illuminance set for each test block is changed for measurement. Therefore, when there is a portion having areas that vary considerably in terms of brightness in the field of view, imaging and measurement need to be performed while changing the illuminance, and such measurement takes time.

SUMMARY

An advantage of some aspects of the invention is to provide an image processing apparatus and an image processing method for three-dimensional measurement technique with a reduced measurement time and improved measurement capability.

An image processing apparatus according to an aspect of the invention includes a projection unit configured to project predetermined fringe pattern light onto an object, an imaging unit configured to image the object onto which the predetermined fringe pattern light is projected by the projection unit, a luminance value acquisition unit configured to acquire a luminance value of a pixel corresponding to the object from captured image data obtained by imaging the object onto which the predetermined fringe pattern light is projected by the imaging unit, a three-dimensional point group generation unit configured to calculate a three-dimensional shape on the basis of luminance value data acquired by the luminance value acquisition unit, and a control unit configured to control the projection unit, the imaging unit, the luminance value acquisition unit, and the three-dimensional point group generation unit. The control unit includes an extended control unit configured to include and control a luminance distribution acquisition unit configured to acquire luminance distribution data of the object from captured image data obtained by imaging the object by using the imaging unit, while causing the projection unit to project uniform pattern light, and a projection luminance setting unit configured to set a projection luminance distribution pattern based on luminance distribution data acquired by the luminance distribution acquisition unit. The extended control unit causes the luminance value acquisition unit to acquire luminance value data from captured image data obtained by imaging the object by using the imaging unit while causing the projection unit to project pattern light based on a projection luminance distribution fringe pattern obtained by combining the projection luminance distribution pattern set by the projection luminance setting unit and the predetermined fringe pattern, and the extended control unit further causes the three-dimensional point group generation unit to calculate a three-dimensional shape based on the luminance value data.

According to the aspect, a projection luminance distribution pattern is generated, the projection unit projects projection luminance distribution fringe pattern light based on the projection luminance distribution pattern, and the imaging unit performs imaging under this condition, and thus, a three-dimensional shape of an object to be measured including a high luminance area to a low luminance area, can be calculated in one measurement.

The projection luminance distribution fringe pattern is preferably obtained by superimposing the predetermined fringe pattern and a low luminance pattern. The low luminance pattern having a reduced projection luminance value is set, on the basis of the luminance distribution data, to an object area being an area having a luminance value higher than a predetermined reference luminance by at least a predetermined value. According to this configuration, a projection luminance distribution fringe pattern can be relatively readily generated.

The projection luminance distribution fringe pattern may have a plurality of object areas each of which is the object area and in which the low luminance pattern has different projection luminance values for the respective object areas. According to such a configuration, an object to be measured having a wider range of luminance can be measured.

The low luminance pattern set to the object area may have projection luminance values distributed in one object area. According to such a configuration, an object to be measured having a wider range of luminance can be measured.

The projection unit preferably includes a correction table representing a relationship between input luminance and measured luminance corresponding to the input luminance, determines set luminance corresponding to luminance to be projected in accordance with a proportional relationship of a minimum value and a maximum value of the input luminance to a minimum value of measured luminance and a maximum value of measured luminance corresponding to the minimum value and the maximum value of the input luminance, and projects, as input luminance, actually set luminance corresponding to measured luminance in the correction table corresponding to the set luminance. According to this configuration, an output luminance range of the projection unit can be relatively readily expanded.

An image processing method according to another aspect of the invention includes acquiring luminance distribution data of an object from captured image data obtained by causing an imaging unit to image the object while projecting uniform pattern light onto the object, setting a projection luminance distribution pattern based on the luminance distribution data acquired in the acquiring of luminance distribution data, projecting onto the object projection luminance distribution fringe pattern light obtained by combining the projection luminance distribution pattern set in the setting of a projection luminance distribution pattern and a predetermined fringe pattern, imaging the object onto which the projection luminance distribution fringe pattern light is projected in the projecting of projection luminance distribution fringe pattern light, acquiring a luminance value of a pixel corresponding to the object from captured image data obtained by imaging performed in the imaging of the object, and calculating a three-dimensional shape based on luminance value data acquired in the acquiring of a luminance value.

In such an aspect, a projection luminance distribution pattern is generated, the projection unit projects a projection luminance distribution fringe pattern light based on the projection luminance distribution pattern, and the imaging unit performs imaging under this condition, and thus, a three-dimensional shape of an object to be measured, including a high luminance area to a low luminance area, can be calculated in one measurement.

BRIEF DESCRIPTION OF THE DRAWINGS

Embodiments of the invention will be described by way of example only with reference to the accompanying drawings, wherein like numbers reference like elements.

Fig. 1 is a schematic diagram of an image processing apparatus according to Embodiment 1 of the invention.
Fig. 2 is a diagram illustrating an example of an object.
Fig. 3 is a diagram illustrating an example of a fringe pattern.
Fig. 4 is a diagram illustrating an example of captured image data.
Fig. 5 is a diagram illustrating an example of captured image data.
Fig. 6 is a diagram illustrating an example of captured image data.
Fig. 7 is a diagram illustrating an example of a low luminance pattern according to Embodiment 1 of the invention.
Fig. 8 is a diagram illustrating an example of a projection luminance distribution fringe pattern according to Embodiment 1 the invention.
Fig. 9 is a diagram illustrating an example of captured image data according to Embodiment 1 of the invention.
Fig. 10 is a graph illustrating an example of a relationship between input luminance and output luminance in a projection unit.
Fig. 11 is a graph illustrating an example of a fringe pattern.

Fig. 12 is a graph describing a projection unit according to Embodiment 2 of the invention.
Fig. 13 is a graph illustrating an example of a fringe pattern according to Embodiment 2 of the invention.

DESCRIPTION OF EXEMPLARY EMBODIMENTS

The invention will be described in detail below on the basis of embodiments.

Embodiment 1

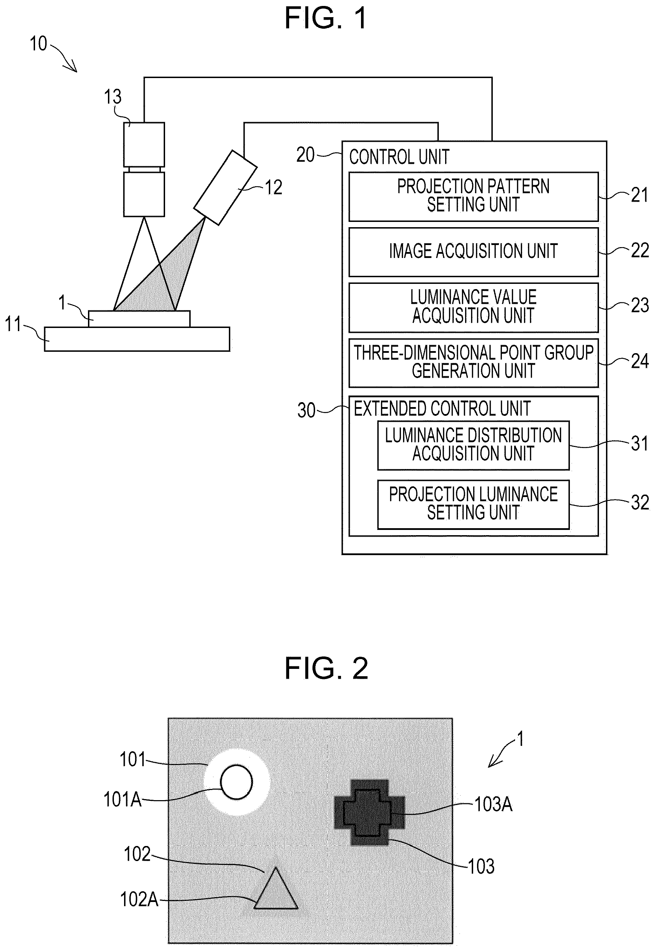

Embodiment 1 of the invention will be described below with reference to the drawings. Fig. 1 is a schematic diagram illustrating an example of an image processing apparatus according to Embodiment 1. The image processing apparatus 10 includes, for example, a base 11 on which an object 1 is mounted, a projection unit 12, an imaging unit 13, and a control unit 20 configured to control the projection unit 12 and the imaging unit 13. The imaging unit 13 is a camera including, for example, a charge coupled device (CCD) or a complementary metal oxide semiconductor (CMOS), which is an imaging element that converts focused light into an electric signal. Hereinafter, for ease of description, it is assumed that the imaging unit 13 captures a still image. Note however that the imaging unit 13 may capture a moving image instead of capturing a still image.

The projection unit 12 is, for example, a projector including a liquid crystal light valve and a projection lens which project a projection image, a liquid crystal drive unit, and a superhigh pressure mercury lamp or metal halide lamp as a light source. The projection unit 12 is communicably connected to the control unit 20, for example, by using a cable. The wired communication by using a cable is performed in accordance with a standard such as Ethernet (registered trademark) or Universal Serial Bus (USB). The projection unit 12 and the control unit 20 may be connected via wireless communication performed in accordance with a communication standard such as Wi-Fi (registered trademark). The projection unit 12 acquires various patterns (images) from the control unit 20 through communication and projects the acquired patterns onto the object 1.

The imaging unit 13 is communicably connected to the control unit 20, for example, by using a cable. The wired communication by using a cable is performed in accordance with a standard such as Ethernet (registered trademark) or USB. The imaging unit 13 and the control unit 20 may be connected via wireless communication performed in accordance with a communication standard such as Wi-Fi. The imaging unit 13 images the object 1.

The control unit 20 includes a projection pattern setting unit 21 configured to generate a projection pattern to be projected by the projection unit 12, an image acquisition unit 22 configured to acquire captured image data obtained by imaging the object 1 by using the imaging unit 13, a luminance value acquisition unit 23 configured to acquire a luminance value of a pixel corresponding to the object 1 from captured image data acquired by the image acquisition unit 22, and a three-dimensional point group generation unit 24 configured to calculate a three-dimensional shape on the basis of luminance value data acquired by the luminance value acquisition unit 23.

The image processing apparatus 10 having such a configuration calculates a three-dimensional shape, for example, by using a phase shift method. First, the process of the phase shift method will be described. In the phase shift method, a fringe pattern light in which luminance changes sinusoidally is projected from the projection unit 12 onto the object 1, and the imaging unit 13 performs imaging while the fringe pattern being controlled. The phase of the fringe pattern projected onto the object 1 is shifted by a predetermined amount of phase shift. Phase shift is repeated a plurality of times (at least three times, normally four times or more) until the phase of the fringe pattern is shifted by one cycle. Whenever the phase of the fringe pattern is shifted, the imaging unit 13 images the object 1 onto which the fringe pattern light is projected. For example, when the amount of phase shift is $\pi/2$ [rad], the phase of a fringe is shifted by 0, $\pi/2$, $\pi$, and $3\pi/2$, and an image of the object to be measured is captured at each phase. Then a total of four sets of captured image data are acquired.

Next, the luminance value acquisition unit 23 acquires the luminance of pixels of the object 1 on the basis of captured image data. In four phase shifts, luminance values of the pixels are obtained from each of four sets of captured image data. Then, the luminance values are applied to the following formula (1) to obtain a phase $\varphi(x,y)$ at coordinates $(x,y)$.

$$\varphi(x,y) = \tan^{-1}\{I_{3\pi/2}(x,y) - I_{\pi/2}(x,y)\} / \{I_0(x,y) - I_{\pi}(x,y)\} \ldots (1)$$

In the formula (1), $I_0(x,y)$, $I_{\pi/2}(x,y)$, $I_{\pi}(x,y)$, and $I_{3\pi/2}(x,y)$ denote the luminance value of a pixel positioned at coordinates $(x,y)$ for the phases 0, $\pi/2$, $\pi$, and $3\pi/2$, respectively.

When the phase $\varphi(x,y)$ can be determined, height information at respective coordinates can be obtained on the basis of the phase $\varphi(x,y)$ in accordance with the principle of triangulation, thus enabling a three-dimensional shape of the object 1 to be obtained.

An example of the object 1 is illustrated in Fig. 2. The object 1 of Fig. 2 has a high luminance area 101, an intermediate luminance area 102, and a low luminance area 103, and each of the areas has a corresponding object 101A, 102A, or 103A to be measured and for which the three-dimensional shape measurement is desired.

When the method described above is applied to such an object 1 in which there is a large variation in luminance, the three-dimensional shapes of all the objects to be measured 101A to 103A cannot be measured in one measurement, as described below.

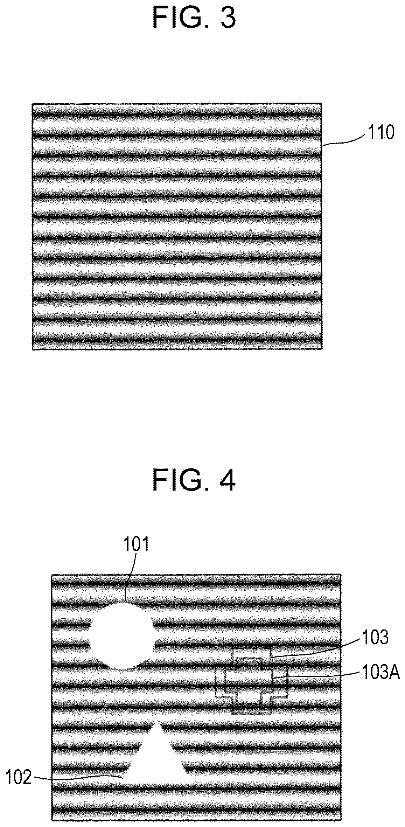

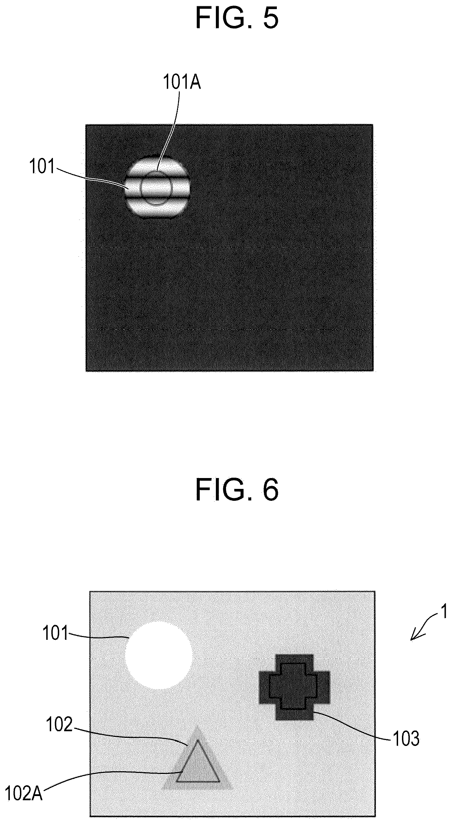

Fig. 3 illustrates a fringe pattern 110 in which there is a sinusoidal variation in luminance in the top-to-bottom direction on the plane of Fig. 3, and in which at least four phases occur. Examples of captured image data obtained by imaging the object 1 onto which such a fringe pattern 110 is projected at different exposure times by the imaging unit 13 are illustrated in Figs. 4 and 5. Fig. 4 illustrates captured image data where exposure is adjusted to the low luminance area 103. Thus, the object 103A to be measured in the low luminance area 103 can be detected, but the object 101A to be measured in the high luminance area 101 and the object 102A to be measured in the intermediate luminance area 102 cannot be detected due to halation. In contrast, as illustrated in Fig. 5, when exposure is adjusted for the high luminance area 101, the object 101A to be measured can be detected, but the intermediate luminance area 102 and the low luminance area 103 become dark areas due to insufficient light intensity, and the objects 102A and 103A to be measured cannot be detected.

Therefore, such an object 1 in which there are large variations in luminance usually needs to be subjected to measurement three times at different exposure times, and this procedure further needs to be performed for each phase shift.

The image processing apparatus 10 according to the present embodiment includes an extended control unit 30 so as to measure, in a single imaging step, such an object 1 in which there are large variations in luminance. The extended control unit 30 is configured to cause the projection unit 12 to project uniform pattern light and cause, in such a state, the imaging unit 13 to image the object 1. The extended control unit 30 includes a luminance distribution acquisition unit 31 and a projection luminance setting unit 32. The luminance distribution acquisition unit 31 is configured to acquire luminance distribution data of the object 1 from image data captured by the imaging unit 13. The projection luminance setting unit 32 is configured to set a projection luminance distribution pattern based on the luminance distribution data acquired by the luminance distribution acquisition unit 31. The extended control unit 30 causes the projection unit 12 to project uniform pattern light, and causes, in such a state, the imaging unit 13 to image the object 1 to acquire image data. The extended control unit 30 causes the luminance distribution acquisition unit 31 to acquire the luminance distribution data of the object 1 from the image data, and causes the projection luminance setting unit 32 to set a projection luminance distribution pattern based on the luminance distribution data. Then, the extended control unit 30 transmits the projection luminance distribution pattern set by the projection luminance setting unit 32 to the projection pattern setting unit 21, causes the projection pattern setting unit 21 to set a projection luminance distribution fringe pattern obtained by combining the projection luminance distribution pattern and a predetermined fringe pattern, and causes the projection unit 12 to project pattern light based on the projection luminance distribution fringe pattern. Although detailed description will be made later, even when there are large variations in luminance in the object 1 as described above, the three-dimensional shape of the object 1 can be calculated in a single measurement. This process will be described in detail below.

The extended control unit 30 first causes the projection unit 12 to project uniform pattern light. The uniform pattern is, for example, a uniformly white pattern, and the luminance of the white pattern may be set appropriately. The extended control unit 30 causes the imaging unit 13 to image the object 1 onto which the uniform pattern is being projected. This imaging is performed with exposure adjusted for the intermediate luminance area 102. An example of captured image data is illustrated in Fig. 6. In the captured image data, the object 102A to be measured in the intermediate luminance area 102 can be visually confirmed, but the object 101A to be measured in the high luminance area 101 can barely be visually confirmed due to halation, and the object 103A to be measured in the low luminance area 103 cannot be visually confirmed due to underexposure. This is because of the considerable difference in luminance between the high luminance area 101 and the low luminance area 103. Here, for example, imaging may be performed under exposure conditions enabling visual confirmation of the object 103A to be measured in the low luminance area 103.

Next, the extended control unit 30 causes the luminance distribution acquisition unit 31 to acquire luminance value data based on the captured image data, and causes the projection luminance setting unit 32 to set a projection luminance distribution pattern based on the luminance value data.

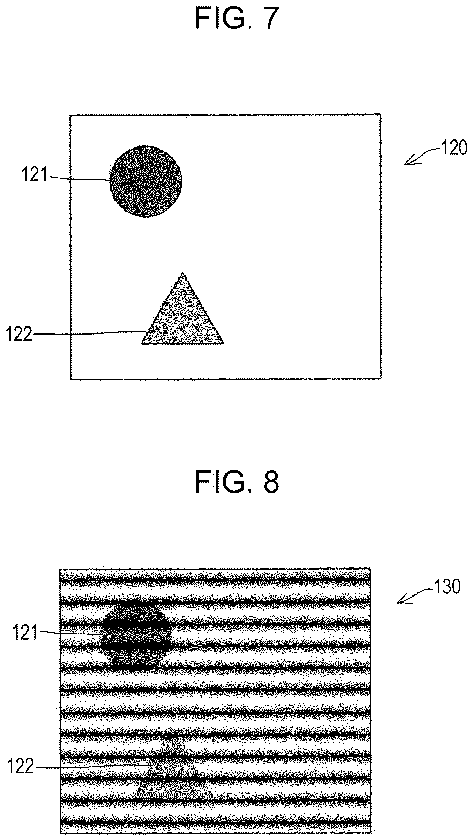

An example of a projection luminance distribution pattern is illustrated in Fig. 7. The projection luminance distribution pattern 120 includes low luminance patterns 121 and 122 where the luminance of the high luminance area 101 and the intermediate luminance area 102 which are selected as object areas is reduced by a predetermined value. The low luminance pattern 121 corresponds to the high luminance area 101 and is a pattern having a relatively large luminance value to be reduced, and the low luminance pattern 122 corresponds to the intermediate luminance area 102 and is a pattern having a relatively small luminance value to be reduced. The low luminance patterns 121 and 122 are set so that, by reducing luminance values of the high luminance area 101 and the intermediate luminance area 102 by a predetermined amount, exposure is moderate also in the high luminance area 101 and the intermediate luminance area 102 when imaging is performed while exposure is adjusted for the low luminance area 103.

Upon setting the object areas, the shapes or sizes thereof may be set appropriately without the shapes or sizes thereof being similar to those of the high luminance area 101 and the intermediate luminance area 102, and the object areas may be set to include at least the objects 101A and 102A to be measured. In setting such an object area, an area having a luminance value larger than a predetermined reference luminance by a predetermined value is defined as the object area on the basis of a luminance value acquired by the luminance distribution acquisition unit 31. The object area may be set on at least the basis of a difference between luminance values in areas where the objects 101A to 103A to be measured are positioned. Furthermore, a low luminance pattern in a projection luminance distribution pattern set by the projection luminance setting unit 32 may be set to have an appropriate exposure in the high luminance area 101 or the intermediate luminance area 102 while adjusting exposure for the low luminance area 103.

Such low luminance patterns 121 and 122 in the projection luminance distribution pattern 120 each have a constant luminance value, but in the low luminance patterns 121 and 122, the respective luminance values may be set to be changed.

Such a projection luminance distribution pattern 120 is transmitted to the projection pattern setting unit 21, combined with the fringe pattern 110 described above, and formed into a projection luminance distribution fringe pattern 130 as illustrated in Fig. 8. Note that even when the fringe pattern is phase-shifted, the positions of the low luminance patterns 121 and 122 are not changed.

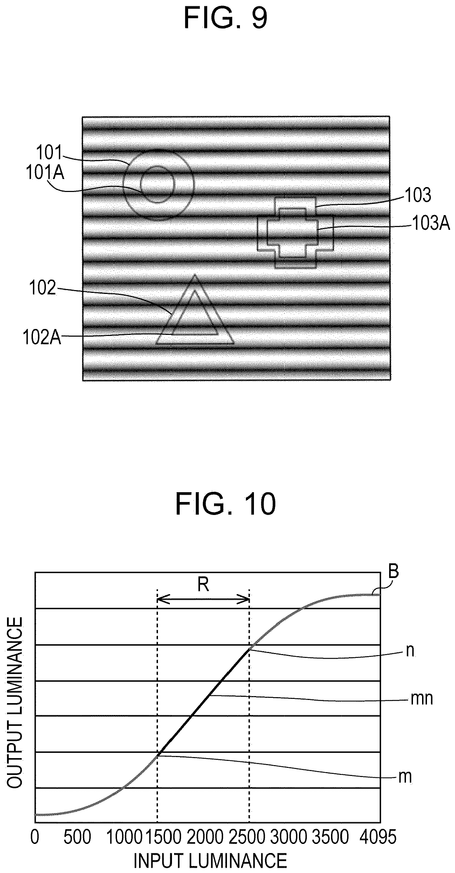

The projection unit 12 projects the projection luminance distribution fringe pattern 130, and the imaging unit 13 performs imaging in this state. An example of the captured image data is illustrated in Fig. 9. As illustrated in Fig. 9, in the captured image data where the projection luminance distribution fringe pattern 130 is projected, exposure is appropriate in all areas ranging from the high luminance area 101 to the low luminance area 103, and all of the objects 101A to 103A to be measured can be measured.

The image processing apparatus 10 according to this embodiment can measure a three-dimensional shape of a normal object by using a normal method, but for the object 1 in which there are large changes in luminance, as illustrated in Fig. 2, the extended control unit 30 generates the projection luminance distribution pattern 120, the projection unit 12 projects the projection luminance distribution fringe pattern 130 based on the projection luminance distribution pattern 120, and the imaging unit 13 performs imaging in this state. Thus, the three-dimensional shapes of the objects 101A, 102A, and 103A to be measured in the high luminance area 101, the intermediate luminance area 102, and the low luminance area 103 can be measured in one measurement.

The above-described process will be summarized as follows.

The process includes a luminance distribution acquisition step of causing the imaging unit 13 to image the object 1 onto which uniform pattern light is being projected and acquiring, by the luminance distribution acquisition unit 31, luminance distribution data of the object 1 from captured image data, a projection luminance setting step of setting, by the projection luminance setting unit 32, the projection luminance distribution pattern 120 based on the luminance distribution data acquired in the luminance distribution acquisition step, a projection step of projecting, by the projection pattern setting unit 21, pattern light onto the object 1 based on the projection luminance distribution fringe pattern 130 obtained by combining the projection luminance distribution pattern 120 set in the projection luminance setting step with the predetermined fringe pattern 110, an imaging step of imaging the object 1 onto which the pattern light based on the projection luminance distribution fringe pattern 130 is projected in the projection step, and acquiring captured image data by the image acquisition unit 22, a luminance value acquisition step of acquiring a luminance value of a pixel corresponding to the object 1 from the captured image data (Fig. 9) obtained by imaging performed in the imaging step, by the luminance value acquisition unit 23, and a three-dimensional point group generation step of calculating, by the three-dimensional point group generation unit 24, a three-dimensional shape based on luminance value data acquired in the luminance value acquisition step.

Embodiment 2

The present embodiment relates to an image processing apparatus including a function of expanding a projectable luminance range of the projection unit 12, the other portions are similar to those in Embodiment 1, and repeated description thereof will be omitted.

There may be a case in Embodiment 1 where the projection luminance distribution fringe pattern 130 is not able to be projected with the projectable luminance range of the projection unit 12, but according to this embodiment, the projection luminance range can be expanded using software, and even when the luminance range of the projection luminance distribution fringe pattern 130 is large, projection can be performed. Note that this method is used not only for the projection of the projection luminance distribution fringe pattern 130, but also for projection of the fringe pattern 110, and in this case, a sinusoidal fringe pattern in which a luminance difference is large is formed to advantageously improve accuracy in three-dimensional shape measurement.

Fig. 10 illustrates a normal output-luminance setting method of a projection unit 2 and illustrates a relationship between input luminance and output luminance.

In general, the output luminance of the projection unit 2 is not linear shape but curved shape, with respect to an input value. Therefore, normally, a range having a response closer to a linear response, for example, an area R of Fig. 10 where input luminance is 1500 to 2500, that is, a range from a point m to a point n of a luminance curve B, is used to control the projection of the fringe pattern 110.

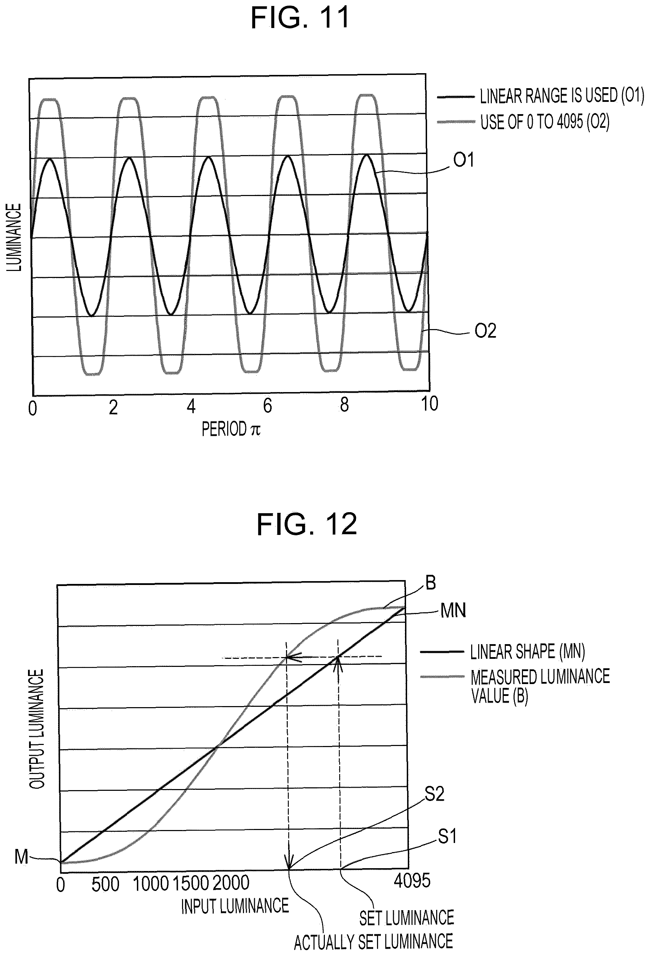

In this case, the fringe pattern is represented by the pattern O1 in Fig. 11 and has a sinusoidal waveform having a narrow luminance range. In contrast, when a fringe pattern is generated using the whole range of input luminance 0 to 4095, the fringe pattern is represented by a pattern O2 in Fig. 11, and has a sinusoidal waveform having a shape flattened at the top and bottom.

In this embodiment, a relationship between input luminance and measured luminance corresponding to the input luminance is measured in advance, and the measured relationship is stored as a correction table. Input luminance corresponding to predetermined output luminance is determined as set luminance S1 on the basis of a straight line MN connecting a point M, where input luminance corresponds to input luminance 0 as a minimum value, and a point N, where input luminance corresponds to input luminance 4095 as a maximum value. However, for input luminance actually set, output luminance corresponding to output luminance of set luminance on the straight line MN is obtained from the correction table described above, and this value is defined as actually set luminance S2. This will be described with reference to Fig. 12. A point of intersection of the set luminance S1 and the straight line MN is the predetermined output luminance, and input luminance corresponding to a point of intersection of the output luminance and the curve B is the actually set luminance S2.

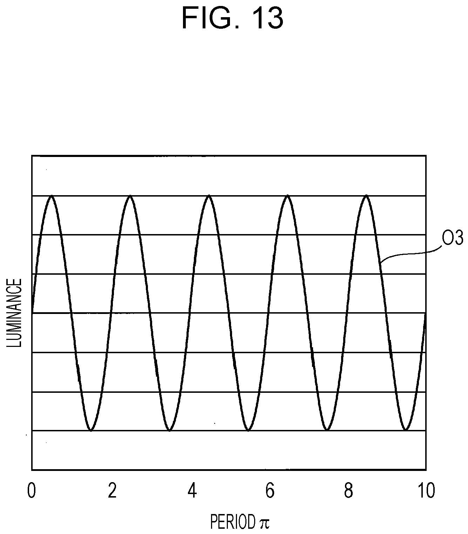

As described above, set luminance corresponding to luminance to be projected is determined in accordance with a proportional relationship of a minimum value and a maximum value of the input luminance to a minimum value of measured luminance and a maximum value of measured luminance corresponding to the minimum value and the maximum value of the input luminance, and actually set luminance corresponding to measured luminance in the correction table corresponding to the set luminance is projected as input luminance. As a result, a sinusoidal waveform having a wide luminance range as illustrated in Fig. 13 can be obtained to correspond to the projection luminance distribution fringe pattern 130 having a wide luminance range.

**Claims**

1. An image processing apparatus (10) comprising:

   a projection unit (12) configured to project predetermined fringe pattern light onto an object;
   an imaging unit (13) configured to image the object onto which the predetermined fringe pattern light is projected by the projection unit;
   a luminance value acquisition unit (23) configured to acquire a luminance value of a pixel corresponding to the object from captured image data obtained by imaging the object onto which the predetermined fringe pattern light is projected by the imaging unit;
   a three-dimensional point group generation unit (24) configured to calculate a three-dimensional shape on the basis of luminance value data acquired by the luminance value acquisition unit; and
   a control unit (20) configured to control the projection unit, the imaging unit, the luminance value acquisition unit, and the three-dimensional point group generation unit,
   wherein the control unit includes
   an extended control unit (30) configured to include and control:

      a luminance distribution acquisition unit (31) configured to acquire luminance distribution data of the object from captured image data obtained by imaging the object by using the imaging unit, while causing the projection unit to project uniform pattern light, and
      a projection luminance setting unit (32) configured to set a projection luminance distribution pattern based on luminance distribution data acquired by the luminance distribution acquisition unit, and

   the extended control unit causes the luminance value acquisition unit to acquire luminance value data from captured image data obtained by imaging the object by using the imaging unit while causing the projection unit to project pattern light based on a projection luminance distribution fringe pattern obtained by combining the projection luminance distribution pattern set by the projection luminance setting unit and the predetermined fringe pattern, and the extended control unit further causes the three-dimensional point group generation unit to calculate a three-dimensional shape based on the luminance value data.

**2.** The image processing apparatus according to claim 1, wherein
the projection luminance distribution fringe pattern is obtained by superimposing the predetermined fringe pattern and a low luminance pattern, and the low luminance pattern having a reduced projection luminance value is set, based on the luminance distribution data, to an object area being an area having a luminance value higher than a predetermined reference luminance by at least a predetermined value.

**3.** The image processing apparatus according to claim 2, wherein
the projection luminance distribution fringe pattern has a plurality of object areas each of which is the object area and in which the low luminance pattern has different projection luminance values for the respective object areas.

**4.** The image processing apparatus according to claim 2, wherein
the low luminance pattern set to the object area has projection luminance values distributed in one object area.

**5.** The image processing apparatus according to any one of the preceding claims, wherein
the projection unit includes a correction table representing a relationship between input luminance and measured luminance corresponding to the input luminance, determines set luminance corresponding to luminance to be projected in accordance with a proportional relationship of a minimum value and a maximum value of the input luminance to a minimum value of measured luminance and a maximum value of measured luminance corresponding to the minimum value and the maximum value of the input luminance, and projects, as input luminance, actually set luminance corresponding to measured luminance in the correction table corresponding to the set luminance.

**6.** An image processing method comprising:

acquiring luminance distribution data of an object from captured image data obtained by causing an imaging unit (13) to image the object while projecting uniform pattern light onto the object;
setting a projection luminance distribution pattern based on the luminance distribution data acquired in the acquiring of luminance distribution data;
projecting onto the object projection luminance distribution fringe pattern light obtained by combining the projection luminance distribution pattern set in the setting of a projection luminance distribution pattern and a predetermined fringe pattern;
imaging the object onto which the projection luminance distribution fringe pattern light is projected in the projecting of projection luminance distribution fringe pattern light;
acquiring a luminance value of a pixel corresponding to the object, from captured image data obtained by imaging performed in the imaging of the object; and
calculating a three-dimensional shape based on luminance value data acquired in the acquiring of a luminance value.

# FIG. 1

10

13

12

20 — CONTROL UNIT

| PROJECTION PATTERN SETTING UNIT | 21 |

| IMAGE ACQUISITION UNIT | 22 |

| LUMINANCE VALUE ACQUISITION UNIT | 23 |

| THREE-DIMENSIONAL POINT GROUP GENERATION UNIT | 24 |

30 — EXTENDED CONTROL UNIT

| LUMINANCE DISTRIBUTION ACQUISITION UNIT | 31 |

| PROJECTION LUMINANCE SETTING UNIT | 32 |

11

1

# FIG. 2

101

101A

102

102A

1

103A

103

## FIG. 3

110

## FIG. 4

101
103
103A
102

# FIG. 5

# FIG. 6

# FIG. 7

# FIG. 8

# FIG. 9

# FIG. 10

# FIG. 11

LINEAR RANGE IS USED (O1)
USE OF 0 TO 4095 (O2)

O1

O2

LUMINANCE

0    2    4    6    8    10

PERIOD π

# FIG. 12

B
MN

LINEAR SHAPE (MN)
MEASURED LUMINANCE
VALUE (B)

OUTPUT LUMINANCE

S2
S1

M

0   500  1000 1500 2000                    4095

INPUT LUMINANCE

SET LUMINANCE
ACTUALLY SET LUMINANCE

# FIG. 13

Europäisches
Patentamt

European
Patent Office

Office européen
des brevets

# EUROPEAN SEARCH REPORT

Application Number

EP 17 20 7560

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2016/057043 A1 (GEORGIA TECH RES INST [US]) 14 April 2016 (2016-04-14) * page 8, line 17 - page 9, line 7; figures 2,3,10,15 * * page 9, line 21 - line 25 * * page 16, line 14 - page 17, line 4 * * page 18, line 5 - page 23, line 5 * ----- | 1-6 | INV. G01B11/25 G06T7/50 |
| X | HUI LIN ET AL: "Adaptive digital fringe projection technique for high dynamic range three-dimensional shape measurement", OPTICS EXPRESS, vol. 24, no. 7, 4 April 2016 (2016-04-04), page 7703, XP055464947, ISSN: 2161-2072, DOI: 10.1364/OE.24.007703 * abstract; chapter 2; figures 3,9 * ----- | 1-6 | |
| X | GELAREH BABAIE ET AL: "Dynamics range enhancement in digital fringe projection technique", PRECISION ENGINEERING, vol. 39, 5 July 2014 (2014-07-05), pages 243-251, XP055464952, AMSTERDAM, NL ISSN: 0141-6359, DOI: 10.1016/j.precisioneng.2014.06.007 * chapter 2; figures 2,6,11 * ----- | 1-5 | TECHNICAL FIELDS SEARCHED (IPC) G01B G06T |

The present search report has been drawn up for all claims

| Place of search | Date of completion of the search | Examiner |
|---|---|---|
| Munich | 6 April 2018 | Biedermann, Benjamin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 20 7560

This annex lists the patent family members relating to the patent documents cited in the above-mentioned European search report.
The members are as contained in the European Patent Office EDP file on
The European Patent Office is in no way liable for these particulars which are merely given for the purpose of information.

06-04-2018

| Patent document cited in search report | Publication date | Patent family member(s) | Publication date |
|---|---|---|---|
| WO 2016057043 A1 | 14-04-2016 | US 2017254642 A1<br>WO 2016057043 A1 | 07-09-2017<br>14-04-2016 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009115612 A
- JP 2013036791 A